# EUROPÄISCHE PATENTSCHRIFT

(11) **EP 2 281 180 B1**
(45) Veröffentlichungstag und Bekanntmachung des Hinweises auf die Patenterteilung: **09.09.2015**
(21) Anmeldenummer: 09741649.9
(22) Anmeldetag: 08.05.2009
(51) Int. Cl.: G01B 3/00, G01B 3/10, G01D 5/14

(54) **MASSELEMENT FÜR EIN LÄNGENMESSSYSTEM**
MEASUREMENT ELEMENT FOR A LENGTH MEASURING SYSTEM
ÉLÉMENT DE MESURE POUR UN SYSTÈME DE MESURE DE LONGUEUR

(30) Priorität: 08.05.2008 DE 202008006293 U
(43) Veröffentlichungstag der Anmeldung: 09.02.2011
(73) Patentinhaber: Schneeberger Holding AG, 4914 Roggwil (CH)
(72) Erfinder: GÖTZ, Klaus-Dieter, 74372 Sersheim (DE)
(74) Vertreter: EGLI-EUROPEAN PATENT ATTORNEYS
(86) Internationale Anmeldenummer: PCT/CH2009/000148
(87) Internationale Veröffentlichungsnummer: WO 2009/135331

(56) Entgegenhaltungen:
- WO-A1-89/02570
- FR-A1- 2 651 877
- JP-A- 55 122 103
- JP-A- 57 156 517
- US-A- 4 316 081
- US-A- 4 747 215
- US-A- 5 743 021
- US-B1- 6 563 303

## Beschreibung

Die Erfindung bezieht sich auf ein Längenmesssystem mit einem Maßelement, welches in der Form eines flexiblen Bandes ausgebildet ist und eine Maßverkörperung umfasst, welche mit einer Messeinrichtung des jeweiligen Längenmesssystems abtastbar ist, wie z.B. offenbart in US 6,563,303 B1.

Aus dem Stand der Technik sind bandförmige Maßelemente bekannt, die aus Kunststoff bestehen und eine Vielzahl magnetisierbarer Partikel aufweisen, die in dem Kunststoff eingebettet sind. Diese langgestreckten Maßelemente sind in der Regel mit einer Maßverkörperung versehen, welche beispieleweise eine Längencodierung oder eine Folge von äquidistanten Positionsmarkierungen umfassen kann. Die Maßverkörperung wird in der Regel durch Magnetisieren einzelner Bereiche des jeweiligen Maßelements erzeugt. Zum Erfassen der jeweiligen Längenmessdaten oder Positionsinformationen wird beispielsweise eine Messeinrichtung mit einem Lesekopf zum Abtasten der Maßverkörperung eingesetzt, wobei der jeweilige Lesekopf in der Regel mittels berührungsloser Abtastung in relativem Abstand zum Maßelement verfährt. In der Regel kann das Maßelement mittels einer Klebverbindung an einer Tragstruktur, welche das Maßelement in einer vorgegebenen räumlichen Anordnung hält, befestigt werden. Das Anbringen mittels Klebeverbindung ist jedoch insofern nachteilig, als dass ein dauerhafter sicherer Sitz des Maßelements an der Tragstruktur nicht gewährleistet werden kann. Durch die berührungslose Abtastung werden Maßelemente aus Kunststoff zwar vor Verschleiss bewahrt. Wegen des erforderlichen Mindestabstands zwischen Maßelement und Lesekopf ist allerdings die Genauigkeit der jeweiligen Längenmessung bzw. Positionsbestimmung limitiert, zumal die magnetisierten Bereiche des Maßelements, welche eine Längeninformation bzw. Positionsinformation enthalten, in der Regel eine Mindestgrösse aufweisen müssen, damit sie von dem jeweiligen Lesekopf aus einer vorgegebenen Distanz zuverlässig abgetastet werden können.

Ferner sind aus dem Stand der Technik optische Systeme beziehungsweise Bänder bekannt, bei dem das Maßband von einer Abtasteinrichtung optisch abgetastet wird, um berührungslos Längenmessdaten abzufragen. Nachteilig an diesen Maßbändern ist jedoch, dass das Maßband sehr stark verschmutzen kann, wodurch eine fehlerfreie Abtastung durch die optische Abtasteinrichtung nicht mehr zuverlässig gewährleistet werden kann.

Der vorliegenden Erfindung liegt daher die Aufgabe zugrunde, ein Längenmesssystem zu schaffen, mit dem die genannten Nachteile vermieden werden können, und welches darüber hinaus nahezu wartungsfrei ausgebildet ist.

Diese Aufgabe wird durch ein Längenmesssystem mit den Merkmalen des Anspruchs 1 gelöst.

Vorteilhafte Ausgestaltungen und Weiterbildungen der Erfindung ergeben sich aus den abhängigen Ansprüchen.

Das Maßelement ist in der Form eines flexiblen Bandes ausgebildet und umfasst eine Maßverkörperung, welche mit einer Messeinrichtung des jeweiligen Längenmesssystems abtastbar ist, wobei das flexible Band aus einer nichtmagnetischen ersten Schicht und einer magnetisierbaren zweiten Schicht besteht.

Gemäss der Erfindung ist die erste Schicht als ein aus einem metallischen Werkstoff bestehendes Band ausgebildet, welches zumindest bereichsweise auf einer Seite mit der zweiten Schicht beschichtet ist und als Trägerschicht für die zweite Schicht dient. Weiterhin umfasst die zweite Schicht mehrere magnetisierte Bereiche, welche die Maßverkörperung bilden.

Da das Maßelement in der Form eines flexiblen Bandes ausgebildet ist, kann in diesem Zusammenhang vorausgesetzt werden, dass das metallische Band, welches die erste Schicht bildet, ebenfalls flexibel ist. Die mechanische Festigkeit des Werkstoffs der ersten Schicht und die geometrischen Abmessungen der ersten Schicht sind dementsprechend gewählt.

Dadurch, dass erfindungsgemäss die zweite Schicht auf eine Trägerschicht aus einem metallischen Werkstoff aufgebracht ist, werden mehrere Vorteile erreicht. Metallische Werkstoffe haben, insbesondere verglichen mit für die Herstellung von flexiblen Bändern geeigneten Kunststoffen, eine relativ hohe mechanische Festigkeit und eine relativ grosse Beständigkeit gegen Verschleiss (beispielsweise gegen Verschleiss durch Abrieb). Demzufolge ist es einerseits möglich, die Dicke der ersten Schicht relativ klein zu wählen (die erste Schicht kann beispielsweise als dünne metallische Folie ausgebildet sein). Wegen der geringen Dicke der ersten Schicht wird es möglich, die in der zweiten Schicht ausgebildete Massverkörperung (in Form von mehreren magnetisierten Bereichen) mittels einer Messvorrichtung, welche zum Detektieren der die Massverkörperung bildenden magnetisierten Bereiche in der zweiten Schicht geeignet ist, von der der zweiten Schicht gegenüberliegenden Seite der ersten Schicht her und insbesondere durch die erste Schicht hindurch abzutasten und dabei relativ grosse Messsignale zu erzielen. Wegen der relativ hohen Verschleissfestigkeit des metallischen Werkstoffs ist es dabei auch möglich die jeweilige Messvorrichtung bei der Abtastung der Massverkörperung in mechanischen Kontakt mit der ersten Schicht in mechanischen Kontakt zu bringen und berührend entlang der Oberfläche der ersten Schicht zu führen, ohne die zweite Schicht zu berühren und ohne die zweite Schicht zu beschädigen. Dabei wird zusätzlich gewährleistet, dass die Messvorrichtung immer einen Abstand zur zweiten Schicht bzw. zur Massverkörperung hat, welche durch die jeweilige Dicke der ersten Schicht festgelegt ist. Wird die Dicke der ersten Schicht über die gesamte Länge des Masselements innerhalb vorgegebener Toleranzen gehalten, so kann auf diese Weise der Abstand zwischen der Messvorrichtung und der zweiten Schicht bzw. der Massverkörperung über die gesamte Länge des Masselements entsprechend präzise kontrolliert werden. Letzteres verbessert die Genauigkeit der Abtastung der Massverkörperung mittels der jeweiligen Messvorrichtung.

Beispielsweise kann die Maßverkörperung mittels magnetischer Verfahren in der zweiten (magnetisierbaren) Schicht erzeugt werden. Der Aufbau der Maßverkörperung kann dabei beispielsweise aus zwei magnetisierten Spuren bestehen: Einer Inkrementalspur, bestehend aus einer Aneinanderreihung von magnetisierten Bereichen mit unterschiedlicher Polarität (Nord- bzw. Südpole) und mit gleicher Breite von beispielsweise ca. 200µm, und einer Referenzspur zur Bestimmung einer absoluten Position, wobei die Referenzspur mit abstandscodierten Marken oder mit Referenzmarken zur Kennzeichnung einer oder mehrerer vorbestimmten Positionen versehen ist.

Die Maßverkörperung des Maßelements kann mit einer Messeinrichtung abgetastet werden, welche einen Sensor, der sensitiv für die von den magnetisierten Bereichen ausgehenden magnetischen Felder ist, enthält. Als Sensor ist beispielsweise ein magnetoresistiver Sensor geeignet, wobei bei einer Relativbewegung zwischen Sensor und Maßverkörperung die Änderung der Feldstärke in einem magnetoresistiven Sensormaterial zu einer meßbaren Änderung des elektrischen Widerstandes führt.

Die erste Schicht kann vorzugsweise aus einem verschleissfesten, gegen Abrieb resistenten, harten und/oder korrosionsbeständigem Werkstoff, insbesondere Stahl oder einer Stahllegierung, bestehen. Diese erste Schicht dient als verschleissfeste Abdeckung beziehungsweise Schutzschicht für die zweite Schicht und schützt die Magnetisierung vor nachträglicher Veränderung durch mechanische oder chemische Einflüsse.

In einer Weiterentwicklung dieser Ausführungsform ist vorgesehen, dass die (magnetisierbare) zweite Schicht auf Basis einer galvanischen Abscheidung einer Legierungsschicht, insbesondere einer galvanotechnischen Herstellung von Schichten auf der Basis von Kobaltlegierungen, beruhen kann. Die galvanische Abscheidung von metallischen Schichten eignet sich insbesondere für die wirtschaftliche Massenproduktion zu vergleichsweise geringen Kosten und hohem Durchsatz. Kobaltlegierungen wiederum haben den Vorteil, dass eine besonders robuste und korrosionsbeständige Schicht geschaffen werden kann. Es sind natürlich auch andere Legierungsschichten denkbar, mit denen eine robuste magnetisierbare Schicht geschaffen werden kann. In diesem Fall dient die erste Schicht als Trägerschicht für die zweite Schicht. Als erste Schicht kann beispielsweise ein vorgefertigtes flexibles, metallisches Band dienen.

Um die Massverkörperung mittels einer Messeinrichtung bzw. einem Sensor abzutasten, ist die erste Schicht des Maßelements vorzugsweise der Messeinrichtung bzw. dem jeweiligen Sensor zugewandt. Dabei erfolgt die Abtastung der Massverkörperung durch die erste Schicht. Die Messeinrichtung bzw. der jeweilige Sensor zum Abtasten der Maßverkörperung kann insbesondere während des Abtastens jeweils berührend über die erste Schicht geführt werden, wobei die Messeinrichtung bzw. der Sensor nicht mit der zweiten Schicht bzw. der Maßverkörperung in Kontakt gerät. Auf diese Weise kann die Messeinrichtung bzw. der jeweiligen Sensor der Messeinrichtung einerseits in einem konstanten Abstand zur zweiten Schicht und somit zur Maßverkörperung geführt werden. Dies ermöglicht eine zuverlässige Abtastung der Maßverkörperung mit einer grossen Messgenauigkeit. Da andererseits die Abtastung ohne eine mechanische Berührung mit der zweiten Schicht erfolgt, ist die Abtastung mit keinerlei Verschleiss für die zweite Schicht verbunden.

Um das Maßelement an einer Tragstruktur in der Umgebung des Längenmesssystems zu befestigen, sind mehrere Möglichkeiten denkbar. Beispielsweise kann das Maßelement über ein doppelseitiges Klebeband an der Tragstruktur befestigt werden.

Insbesondere im Falle einer metallischen ersten Schicht (Trägerschicht) ist es vorteilhaft, das Maßelement mit der Tragstruktur zu verschweißen beziehungsweise an diese zu heften. Eine Schweißverbindung hat im Vergleich zu einem klebenden Befestigungsverfahren den Vorteil, dass die Verbindung beständig gegenüber Kühlschmiermitteln, Lösemitteln oder Schmierstoffen ist.

Ferner sind Klemm-, Löt-, Schraub- oder auch Walzverbindungen denkbar, um das Maßelement mit einer Tragstruktur in der Umgebung des Längenmesssystems zu verbinden, um nur eine weitere kleine Auswahl zu nennen.

Das Maßelement kann dabei grundsätzlich beliebig an der Tragstruktur angeordnet werden, beispielsweise flachliegend, hochkant oder kreisförmig verlaufend. Die jeweilige Anordnung beziehungsweise Ausrichtung kann sich beispielsweise nach der zu verwendenden Messeinrichtung richten.

Ausführungsbeispiele der Erfindung werden im Folgenden anhand der Zeichnungen näher erläutert. Es zeigen:
- Fig. 1: eine schematische Darstellung eines Längsabschnitts eines erfindungsgemäßen Maßelements;
- Fig. 2: das Maßelement gemäss Fig. 1 mit daran befestigtem Befestigungselement;
- Fig. 3: eine schematisch dargestellte erste Befestigungsmöglichkeit;
- Fig. 4: eine schematisch dargestellte zweite Befestigungsmöglichkeit;
- Fig. 5: eine schematisch dargestellte dritte Befestigungsmöglichkeit.
- Fig. 6: eine schematische Darstellung eines Längenmesssystems mit einem Maßelement gemäss Fig. 1 und einer Messeinrichtung zum Abtasten der Maßverkörperung.

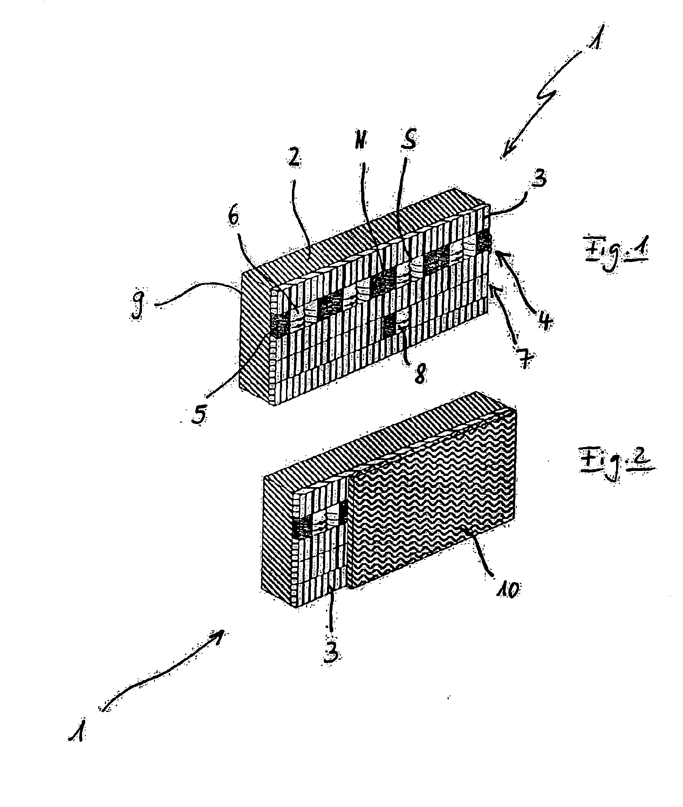

Fig. 1 zeigt die schematische Darstellung eines Längsabschnitts eines Maßelements 1. Das Maßelement 1 ist als elastisch biegsames bzw. flexibles Maßband ausgebildet. Das Maßelement 1 besteht im Wesentlichen aus einer ersten nichtmagnetischen Schicht 2 aus einem metallischen Werkstoff und einer zweiten magnetisierbaren Schicht 3.

Die erste (nichtmagnetische) Schicht 1 überdeckt die zweite (magnetisierbare) Schicht 3 zumindest von einer Seite her vollständig. In der zweiten Schicht 3 ist mittels eines magnetischen Verfahrens eine Maßverkörperung 4 ausgebildet. Die Maßverkörperung 4 besteht im vorliegenden Beispiel aus einer Inkrementalspur 5 aus ca. 200µm breiten magnetisierten Bereichen 6, die mit abwechselnder Polarität (Nordpole bzw. Südpole) in der Längsrichtung des Maßelements 1 angeordnet sind, und einer Referenzspur 7 zur Bestimmung der absoluten Position, wobei die Referenzspur 7 mit abstandscodierten Marken 8 versehen ist. Zur Herstellung der Inkrementalspur der Maßverkörperung 4 werden beispielsweise in verschiedenen Bereichen der zweiten Schicht 3 Magnetfelder mit jeweils unterschiedlichen Richtungen angelegt, sodass eine aus magnetischen Nord- und Südpolen (N, S) bestehende Teilung mit ca. 200 µm Teilungsperiode entsteht. Im Falle der Referenzspur 7 werden vorgegebene absolute Positionen entsprechend mit magnetischen Marken gekennzeichnet.

Die erste Schicht 2 ist als verschleissfeste Trägerschicht beziehungsweise Schutzschicht für die zweite Schicht 3 ausgebildet. Die erste Schicht 2 kann beispielsweise als flexibles Band aus einem verschleissfesten Metall (beispielsweise Stahl) gebildet seine, während die zweite Schicht 3 durch eine Beschichtung einer Seite dieses Bandes hergestellt werden kann, beispielsweise durch eine galvanische Beschichtung.

Zum Abtasten der Maßverkörperung 4 kann eine geeignete Messeinrichtung (in Fig. 1 nicht dargestellt), beispielsweise ein Lesekopf mit einem magnetoresistiven Sensor, mit der der zweiten Schicht 3 gegenüberliegenden Oberfläche 9 der ersten Schicht 2 in Berührung gebracht werden, wobei die Messeinrichtung beim Abtasten längs der Oberfläche 9 und ständig in Kontakt mit der Oberfläche 9 bewegt werden kann. Durch diese Anordnung ist die zweite Schicht 3 und somit die Maßverkörperung 4 weitestgehend vor mechanischen Einflüssen und somit vor mechanischem Verschleiss geschützt.

Es ist deshalb vorteilhaft, das Maßelement 1 mit der harten, verschleissfesten und bevorzugt korrosionsbeständigen ersten Schicht 2 nach aussen zeigend an einer Tragstruktur für das Maßelement 1 zu befestigen, wobei die erste Schicht 2 der jeweiligen Messeinrichtung zum Abtasten der Maßverkörperung 4 zugewandt sein kann.

Fig. 2 zeigt das Maßelement 1 mit einem daran befestigten Befestigungselement 10. Bei dem Befestigungselement 10 handelt es sich um ein doppelseitiges Klebeband. Das doppelseitige Klebeband wird auf der magnetisierbaren zweiten Schicht 3 befestigt und dient dem Befestigen des Maßelements 1 an einer geeigneten Tragstruktur.

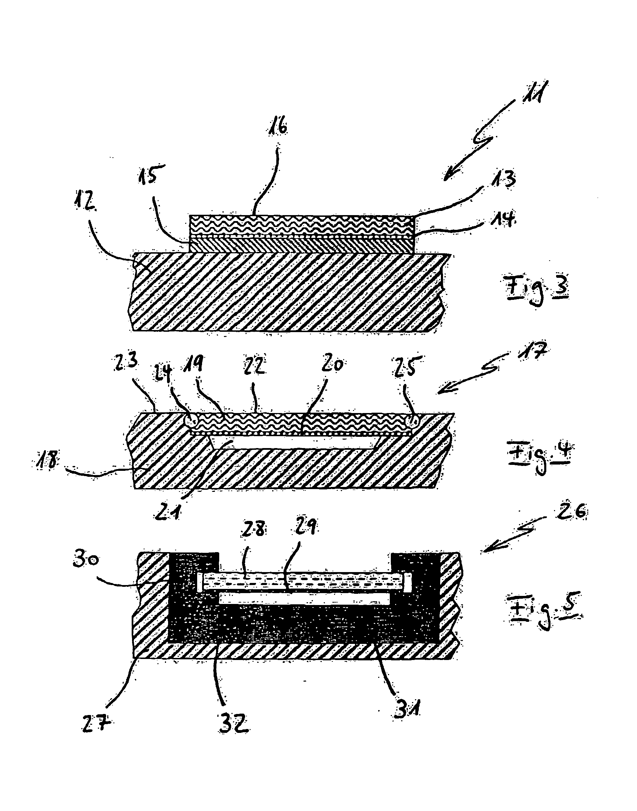

Fig. 3 zeigt eine erste Befestigungsmöglichkeit für ein erfindungsgemässes Maßelement 11 an einer Tragstruktur 12. Das Maßelement 11 besteht aus einer ersten nichtmagnetischen Schicht 13 aus einem metallischen Werkstoff sowie einer zweiten magnetisierbaren Schicht 14 mit einer Maßverkörperung 4. Unterhalb der zweiten Schicht 14 ist ein Klebeband 15 angeordnet. Mittels des Klebebands 15 kann das Maßelement 11 an die Tragstruktur 12 befestigt werden. Die Messeinrichtung zum Abtasten der Maßverkörperung 4 würde berührend auf der Aussenseite 16 der ersten Schicht 13 verfahren, ohne die zweite Schicht 14 zu berühren. Die Abtastung der Maßverkörperung 4 in der zweiten Schicht 14 erfolgt demnach durch die erste Schicht 13 hindurch.

Fig. 4 zeigt eine zweite Befestigungsmöglicht für ein erfindungsgemässes Maßelement 17 an einer Tragstruktur 18. Das Maßelement 17 weist wieder eine erste nichtmagnetische Schicht 19 aus einem metallischen Werkstoff und eine magnetisierbare zweite Schicht 20 mit einer Maßverkörperung 4 auf. Die Tragstruktur 18 weist eine kanalartige Ausnehmung 21 auf, in der das Maßelement 17 angeordnet ist. Die Aussenseite 22 der ersten Schicht 19 ist bündig verlaufend mit der Oberseite 23 der Umgebungsstruktur 18 angeordnet. Das Maßelement 17 beziehungsweise die erste Schicht 19 ist über Schweißstellen 24, 25 mit der Tragstruktur 18 verbunden beziehungsweise an diese geheftet.

Fig. 5 zeigt eine dritte Befestigungsmöglichkeit für ein erfindungsgemässes Maßelement 26 an einer Tragstruktur 27. Das Maßelement 26 weist eine erste Schicht 28 aus einem metallischen Werkstoff und eine magnetisierbare zweite Schicht 29 mit einer Maßverkörperung 4 auf. Das Maßelement 26 ist in einer Nut 30 einer Fixierschiene 31 angeordnet, wobei die Fixierschiene 31 in einer Ausnehmung 32 der Tragstruktur 27 befestigt ist. Wie bei den in den Fig. 3 und 4 dargestellten Ausführungsformen befindet sich die erste Schicht 28 auf einer äusseren Seite, wobei eine Abtastung der Maßverkörperung 4 in der zweiten Schicht 29 durch die erste Schicht 28 erfolgen kann.

Die hier dargestellten Befestigungsmöglichkeiten stellen nur eine kleine Auswahl möglicher Befestigungsmöglichkeiten dar.

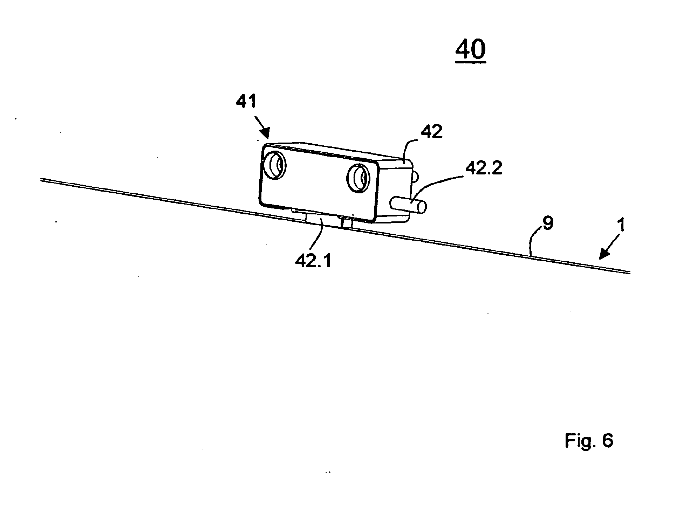

Fig. 6 zeigt ein Längenmesssystem 40, welches das Maßelement 1 gemäss Fig. 1 und eine Messeinrichtung 41 umfasst. Die Messeinrichtung 41 umfasst einen Lesekopf 42, der längs des Maßelements 1 bewegbar ist und zum Abtasten der Maßverkörperung 4 bestimmt ist. Der Lesekopf 42 weist einen Sensor 42.1 auf, welcher die Oberfläche 9 der ersten Schicht des Maßelements 1 berührt und ein elektrisches Signal erzeugt, welches von der jeweiligen lokalen Magnetisierung der zweiten Schicht 3 des Maßelements 1 abhängt. Der Lesekopf ist bei einer Bewegung entlang des Maßelements 1 derart geführt (mit einer in Fig. 6 nicht dargestellten Bewegungsführung), dass der Sensor 42.1 ständig in Kontakt mit der Oberfläche 9 der ersten Schicht bleibt. Der Sensor 42.1 kann beispielsweise ein magnetoresistiver Sensor oder ein anderer Sensor, der empfindlich für die jeweilige Magnetisierung der zweiten Schicht 3 ist, sein. Der Lesekopf 42 umfasst weiterhin eine Auswerteelektronik, welche die jeweiligen Signale des Sensors 42.1 auswertet und Ergebnisse der Auswertung, beispielsweise Informationen über die momentane Position des Lesekopfes 42 bezüglich des Maßelements 1 oder die Länge eines von Lesekopf 41 zurückgelegten Weges, über eine Verbindungsleitung 42.2 an eine (nicht dargestellte) Steuereinheit weiterleitet.

## Patentansprüche

1. Längenmesssystem mit einem eine Maßverkörperung (4) umfassenden Maßelement (1, 11, 17, 26) und einer Messeinrichtung (41) zum Abtasten der Maßverkörperung (4), welches Maßelement (1, 11, 17, 26) in der Form eines flexiblen Bandes ausgebildet ist, wobei das flexible Band aus einer nichtmagnetischen ersten Schicht (2, 13, 19, 28) und einer magnetisierbaren zweiten Schicht (3, 14, 20, 29) besteht, wobei die zweite Schicht (3, 14, 20, 29) mehrere magnetisierte Bereiche umfasst, welche die Maßverkörperung (4) bilden, und die Messeinrichtung (41) einen Sensor (41.1) umfasst, welcher für magnetische Felder sensitiv ist und zum Abtasten der Maßverkörperung (4) am Maßelement (1, 11, 17, 26) entlang bewegbar ist,
**dadurch gekennzeichnet, dass**
die erste Schicht (2, 13, 19, 28) des Maßelements als ein aus einem metallischen Werkstoff bestehendes flexibles Band ausgebildet ist und als Trägerschicht für die zweite Schicht (3, 14, 20, 29) dient, wobei die erste Schicht eine erste äussere Seite und eine der ersten äusseren Seite gegenüberliegende, zweite äussere Seite (9, 16, 22) aufweist und die erste äusaere Seite der ersten Schicht (2, 13, 19, 28) zumindest bereichsweise mit der zweiten Schicht (3, 14, 20, 29) beschichtet ist, und
wobei der Sensor (41.1) an der zweiten äusseren Seite (9, 16, 22) der ersten Schicht (2, 13, 19, 28) angeordnet ist, sodass der Sensor (41.1) entlang einer von der zweiten Schicht (3, 14, 20, 29) abgewandten Oberfläche (9) der ersten Schicht (2, 13, 19, 28) bewegbar ist und das Abtasten der Masaverkörperung (4) durch die erste Schicht (2, 13, 19, 28) hindurch erfolgt.

2. Längenmesssystem nach Anspruch 1, **dadurch gekennzeichnet, dass** die Maßverkörperung (4) mittels magnetischer Verfahren in der zweiten magnetisierbaren Schicht (3, 14, 20, 29) erzeugbar ist.

3. Langenmesasystem nach einem der Ansprüche 1 oder 2, **dadurch gekennzeichnet, dass** die erste Schicht (2, 13, 19, 28) aus einem verschleissfesten, gegen Abrieb resistenten, harten und/oder korrosionsbeständigen metallischen Werkstoff, insbesondere Stahl oder einer Stahllegierung, besteht.

4. Längenmeseaystem nach einem der Ansprüche 1-3, **dadurch gekennzeichnet, dass** die zweite Schicht aus einem Metall oder einer Legierung gebildet ist.

5. Längenmesssystem nach Anspruch 4, **dadurch gekennzeichnet, dass** die zweite Schicht (3, 14, 20, 29) auf der ersten Schicht (2, 13, 19, 28) galvanisch abgeschieden ist.

6. Längenmesssystem nach einem der Ansprüche 1 bis 5, dadurch gekenntzeichnet, dass die erste Schicht (2, 13, 19, 28) als Schutzschicht für die zweite Schicht (3, 14, 20, 29) ausgebildet ist.

7. Längenmesssystem nach einem der Ansprüche 1 bis 6, **dadurch gekennzeichnet, dass** das Maßelement (1, 11, 17, 26) mittels einer stoffschlüssigen Verbindung, insbesondere einer Kleb-, Löt- oder Schweißverbindung, an einer Tragstruktur (12, 18, 27) befestigbar ist.

8. Längenmesssystem nach einem der Ansprüche 1 bis 6, **dadurch gekennzeichnet, dass** das Maßelement (1, 11, 17, 26) mittels einer lösbaren Verbindung, insbesondere einer Schraub-, Steck- oder Klemmverbindung, an einer Tragstruktur (12, 18, 27) befestigbar ist.

9. Längenmesssystem nach einem der Ansprüche 1 bis 8, mit einer Bewegungsführung für die Messeinrichtung (41), welche dazu ausgebildet ist, den Sensor (41.1) zum Abtasten der Maßverkörperung berührend über die erste Schicht (2, 13, 19, 28) zu führen.

10. Längenmesssystem nach einem der Ansprüche 1 bis 9, wobei das Maßelement (11, 17, 26) an einer Tragstruktur (12, 18, 27) derart angeordnet ist, dass die erste Schicht (13, 19, 28) nach aussen zeigt.

11. Längenmesssystem nach Anspruch 10, wobei das Maßelement (17) mittels einer Schweißverbindung (24, 25) an der Tragstruktur (18) befestigt ist.

12. Längenmesssystem nach Anspruch 11, wobei die erste Schicht (19) mit der Tragstruktur (18) verschweisst ist.

## Claims

1. Length measuring system with a measurement element (1, 11, 17, 26), which comprises a measurement body (4), and a measuring unit (41) for scanning the measurement body (4), which measurement element (1, 11, 17, 26) is in the form of a flexible strip, the flexible strip consisting of a non-magnetic first layer (2, 13, 19, 28) and a magnetisable second layer (3, 14, 20, 29), the second layer (3, 14, 20, 29) comprising a plurality of magnetised regions which form the measurement body (4), and the measuring unit (41) comprising a sensor (41.1) which is sensitive to magnetic fields and moveable along the measurement element (1, 11, 17, 26) in order to scan the measurement body (4),
**characterised in that**
the first layer (2, 13, 19, 28) of the measurement element is configured as a flexible strip consisting of a metallic material and acts as a support layer for the second layer (3, 14, 20, 29), the first layer having a first outer side and a second outer side (9, 16, 22) opposite the first outer side, and the first outer side of the first layer (2, 13, 19, 28) being coated at least in part with the second layer (3, 14, 20, 29), and
the sensor (41.1) being arranged on the second outer side (9, 16, 22) of the first layer (2, 13, 19, 28) so that the sensor (41.1) is moveable along a surface (9) of the first layer (2, 13, 19, 28) which faces away from the second layer (3, 14, 20, 29), and the measurement body (4) being scanned through the first layer (2, 13, 19, 28).

2. Length measuring system according to Claim 1, **characterised in that** the measurement body (4) can be produced by magnetic methods in the second magnetisable layer (3, 14, 20, 29).

3. Length measuring system according to one of Claims 1 or 2, **characterised in that** the first layer (2, 13, 19, 28) consists of a wear-resistant, abrasion-resistant, hard and/or corrosion-resistant metallic material, in particular steel or a steel alloy.

4. Length measuring system according to one of Claims 1-3, **characterised in that** the second layer is formed from a metal or an alloy.

5. Length measuring system according to claim 4, **characterised in that** the second layer (3, 14, 20, 29) is galvanically deposited on the first layer (2, 13, 19, 28) .

6. Length measuring system according to one of Claims 1 to 5, **characterised in that** the first layer (2, 13, 19, 28) is configured as a protective layer for the second layer (3, 14, 20, 29).

7. Length measuring system according to one of Claims 1 to 6, **characterised in that** the measurement element (1, 11, 17, 26) is configured to be fixed to a support structure (12, 18, 27) by means of a materially cohesive connection, in particular an adhesive, soldered or welded connection.

8. Length measuring system according to one of Claims 1 to 6, **characterised in that** the measurement element (1, 11, 17, 26) is configured to be fixed to a support structure (12, 18, 27) by means of a releasable connection, in particular a screwed, plugged or clamped connection.

9. Length measuring system according to one of Claims 1 to 8, with a movement guide for the measuring unit (41), which is configured to guide the sensor (41.1) in a touching manner over the first layer (2, 13, 19, 28) to scan the measurement body.

10. Length measuring system according to one of Claims 1 to 9, wherein the measurement element (11, 17, 26) is arranged on a support structure (12, 18, 27) in such a manner that the first layer (13, 19, 28) faces outwards.

11. Length measuring system according to Claim 10, wherein the measurement element (17) is fixed to the support structure (18) by means of a welded connection (24, 25).

12. Length measuring system according to Claim 11, wherein the first layer (19) is welded to the support structure (18).

## Revendications

1. Système de mesure de la longueur avec un élément de mesure (1, 11, 17, 26) comprenant une mesure matérialisée (4) et un dispositif de mesure (41) destiné à balayer la mesure matérialisée (4), lequel élément de meure (1, 11, 17, 26) est conçu sous la forme d'une bande souple, la bande souple étant constituée d'une première couche (2, 13, 19, 28) non magnétique et d'une deuxième couche (3, 14, 20, 29) magnétisable, la deuxième couche (3, 14, 20, 29) comprenant plusieurs zones magnétisées, lesquelles forment la mesure matérialisée (4) et le dispositif de mesure (41) comprenant un capteur (41.1), lequel est sensitif pour des champs magnétiques et pour le balayage de la mesure matérialisée (4), est mobile le long de l'élément de mesure (1, 11, 17, 26),
**caractérisé en ce que**
la première couche (2, 13, 19, 28) de l'élément de mesure est conçue en tant qu'une bande souple constituée d'une matière métallique et sert de couche de support pour la deuxième couche (3, 14, 20, 29), la première couche comportant une première face extérieure et une deuxième face extérieure (9, 16, 22) opposée à la première face extérieure et la première face extérieure de la première couche (2, 13, 19, 28) étant revêtue au moins par zones avec la deuxième couche (3, 14, 20, 29), et
le capteur (41.1) étant placé sur la deuxième face extérieure (9, 16, 22) de la première couche (2, 13, 19, 28), de telle sorte que le capteur (41.1) soit mobile le long d'une surface (9) de la première couche (2, 13, 19, 28) qui est opposée à la deuxième couche (3, 14, 20, 29) et le balayage de la mesure matérialisée (4) s'effectuant à travers la première couche (2, 13, 19, 28).

2. Système de mesure de la longueur selon la revendication 1, **caractérisé en ce que** la mesure matérialisée (4) est susceptible d'être créée au moyen de procédés magnétiques dans la deuxième couche (3, 14, 20, 29) magnétisable.

3. Système de mesure de la longueur selon l'une quelconque des revendications 1 ou 2, **caractérisé en ce que** la première couche (2, 13, 19, 28) est constituée d'une matière métallique résistant à l'usure, résistant à l'abrasion, dure et/ou résistant à la corrosion, notamment d'acier ou d'un alliage d'acier.

4. Système de mesure de la longueur selon l'une quelconque des revendications 1 à 3, **caractérisé en ce que** la deuxième couche est formée en un métal ou en un alliage.

5. Système de mesure de la longueur selon la revendication 4, **caractérisé en ce que** la deuxième couche (3, 14, 20, 29) est déposée par voie galvanique sur la première couche (2, 13, 19, 28).

6. Système de mesure de la longueur selon l'une quelconque des revendications 1 à 5, **caractérisé en ce que** la première couche (2, 13, 19, 28) est conçue en tant que couche protectrice pour la deuxième couche (3, 14, 20, 29).

7. Système de mesure de la longueur selon l'une quelconque des revendications 1 à 6, **caractérisé en ce que** l'élément de mesure (1, 11, 17, 26) est susceptible d'être fixé au moyen d'une liaison par matière, notamment d'une liaison par collage, par brasage ou par soudage sur une structure porteuse (12, 18, 27).

8. Système de mesure de la longueur selon l'une quelconque des revendications 1 à 6, **caractérisé en ce que** l'élément de mesure (1, 11, 17, 26) est susceptible d'être fixé au moyen d'une liaison amovible, notamment d'une liaison par vissage, par enfichage ou par serrage sur une structure porteuse (12, 18, 27).

9. Système de mesure de la longueur selon l'une quelconque des revendications 1 à 8, avec un guidage de déplacement pour le dispositif de mesure (41), lequel est conçu pour guider le capteur (41.1) en contact par-dessus la première couche (2, 13, 19, 28), pour le balayage de la mesure matérialisée.

10. Système de mesure de la longueur selon l'une quelconque des revendications 1 à 9, l'élément de mesure (11, 17, 26) étant placé sur une structure porteuse (12, 18, 27), de telle sorte que la première couche (13, 19, 28) soit dirigée vers l'extérieur.

11. Système de mesure de la longueur selon la revendication 10, l'élément de mesure (17) étant fixé sur la structure porteuse (18) au moyen d'une liaison par soudure (24, 25).

12. Système de mesure de la longueur selon la revendication 11, la première couche (19) étant soudée avec la structure porteuse (18).
